(19) **Europäisches Patentamt**
**European Patent Office**
**Office européen des brevets**

(11) **EP 4 682 192 A1**

(12) **EUROPEAN PATENT APPLICATION**
published in accordance with Art. 153(4) EPC

(43) Date of publication:
**21.01.2026 Bulletin 2026/04**

(21) Application number: **25777975.1**

(22) Date of filing: **04.03.2025**

(51) International Patent Classification (IPC):
*C08J 9/04* *(2006.01)*

(52) Cooperative Patent Classification (CPC):
**C08J 9/04**

(86) International application number:
**PCT/JP2025/007779**

(87) International publication number:
**WO 2025/204594 (02.10.2025 Gazette 2025/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.03.2024 JP 2024053185**

(71) Applicant: **DAIKIN INDUSTRIES, LTD.**
**Osaka-Shi, Osaka 530-0001 (JP)**

(72) Inventors:
• **ISHII, Kenji**
**Osaka-Shi, Osaka 530-0001 (JP)**
• **TOKUDA, Masato**
**Osaka-Shi, Osaka 530-0001 (JP)**
• **MUKAE, Hirofumi**
**Osaka-Shi, Osaka 530-0001 (JP)**
• **KOMORI, Masaji**
**Osaka-Shi, Osaka 530-0001 (JP)**
• **YAMAUCHI, Akiyoshi**
**Osaka-Shi, Osaka 530-0001 (JP)**
• **KISHIKAWA, Yosuke**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **RESIN COMPOSITION FOR FOAM MOLDING, FOAM MOLDED BODY, AND METHOD FOR PRODUCING FOAM MOLDED BODY**

(57) The disclosure aims to provide a foam molding resin composition capable of forming favorable cells even when using non-specialized fluororesin, a foam-molded article, and a method for producing a foam-molded article. The disclosure relates to a foam molding resin composition containing a fluororesin (A); and a compound (B), the compound (B) having a crystallite size of greater than 100 Å determined by X-ray diffractometry and a volatilization amount at 330°C of 7.0% by mass or lower, the compound (B) dispersed in the fluororesin (A) with a distance between centroids of 5 $\mu$m or less.

**Description**

TECHNICAL FIELD

The disclosure relates to foam molding resin compositions, foam-molded articles, and methods for producing foam-molded articles.

BACKGROUND ART

Fluororesin has excellent heat resistance and chemical resistance and thus is widely used for various purposes.
Foam molding is a known technique to achieve weight reduction and improve electrical properties of fluororesin. For example, Patent Literature 1 discloses that specific thermoplastic fluororesin materials, when subjected to melt foam molding, form favorable cells.

CITATION LIST

- Patent Literature

Patent Literature 1: JP 2015-004057 A

SUMMARY OF INVENTION

- Technical Problem

However, the technique disclosed in Patent Literature 1 is applicable to a limited range of fluororesins. There has been room for improvement in this respect.
The disclosure aims to provide a foam molding resin composition capable of forming favorable cells even when using non-specialized fluororesins, a foam-molded article, and a method for producing a foam-molded article.

- Solution to Problem

The disclosure (1) relates to a foam molding resin composition containing a fluororesin (A); and a compound (B), the compound (B) having a crystallite size of greater than 100 Å determined by X-ray diffractometry and a volatilization amount at 330°C of 7.0% by mass or lower, the compound (B) dispersed in the fluororesin (A) with a distance between centroids of 5.0 μm or less.
The disclosure (2) relates to the foam molding resin composition according to the disclosure (1), wherein the fluororesin (A) is a melt-moldable fluororesin.
The disclosure (3) relates to the foam molding resin composition according to the disclosure (1) or (2), wherein the fluororesin (A) includes at least one selected from the group consisting of a tetrafluoroethylene/hexafluoropropylene copolymer and a tetrafluoroethylene/perfluoro(alkyl vinyl ether) copolymer.
The disclosure (4) relates to the foam molding resin composition according to any one of the disclosures (1) to (3), wherein the fluororesin (A) is a tetrafluoroethylene/hexafluoropropylene copolymer.
The disclosure (5) relates to the foam molding resin composition according to any one of the disclosures (1) to (4), wherein the fluororesin (A) is fluorinated.
The disclosure (6) relates to the foam molding resin composition according to any one of the disclosures (1) to (5), wherein the foam molding resin composition contains 80 to 99.99% by mass of the fluororesin (A).
The disclosure (7) relates to the foam molding resin composition according to any one of the disclosures (1) to (6), wherein the foam molding resin composition contains 97% by mass or more and less than 99.85% by mass of the fluororesin (A).
The disclosure (8) relates to the foam molding resin composition according to any one of the disclosures (1) to (7), wherein the foam molding resin composition contains substantially no low molecular weight fluorocompound.
The disclosure (9) relates to the foam molding resin composition according to any one of the disclosures (1) to (8), wherein the compound (B) has a crystallite size of 200 to 1,000 Å determined by X-ray diffractometry and a volatilization amount at 330°C of 1.0% by mass or lower.
The disclosure (10) relates to the foam molding resin composition according to any one of the disclosures (1) to (9), wherein the compound (B) is dispersed in the fluororesin (A) with a distance between centroids of 0.5 to 2.0 μm.
The disclosure (11) relates to the foam molding resin composition according to any one of the disclosures (1) to (10), wherein the compound (B) is dispersed in the fluororesin (A) at a density of 15,000 particles/mm$^2$ or more.

The disclosure (12) relates to the foam molding resin composition according to any one of the disclosures (1) to (11), wherein the compound (B) is dispersed in the fluororesin (A) with a particle size of 4.0 μm or less.

The disclosure (13) relates to the foam molding resin composition according to any one of the disclosures (1) to (12), wherein the compound (B) has a thermal decomposition temperature of 270°C or higher.

The disclosure (14) relates to the foam molding resin composition according to any one of the disclosures (1) to (13), wherein the compound (B) includes at least one selected from the group consisting of a cyclic tetrapyrrole compound, barium sulfate, silicon dioxide, and aluminum oxide.

The disclosure (15) relates to the foam molding resin composition according to any one of the disclosures (1) to (14), wherein the compound (B) includes copper phthalocyanine.

The disclosure (16) relates to the foam molding resin composition according to any one of the disclosures (1) to (15), wherein the foam molding resin composition contains 0.1 to 20 parts by mass of the compound (B) relative to 100 parts by mass of the fluororesin (A).

The disclosure (17) relates to the foam molding resin composition according to any one of the disclosures (1) to (16), wherein the foam molding resin composition contains 0.5 to 2.0 parts by mass of the compound (B) relative to 100 parts by mass of the fluororesin (A).

The disclosure (18) relates to a foam-molded article formed using the foam molding resin composition according to any one of the disclosures (1) to (17).

The disclosure (19) relates to a method for producing a foam-molded article, the method including foam molding the foam molding resin composition according to any one of the disclosures (1) to (17).

The disclosure (20) relates to the method for producing a foam-molded article according to the disclosure (19), wherein the foam molding includes batch foam molding.


- Advantageous Effects of Invention


The disclosure can provide a foam molding resin composition capable of forming favorable cells even when using non-specialized fluororesin, a foam-molded article, and a method for producing a foam-molded article.


DESCRIPTION OF EMBODIMENTS


The disclosure is specifically described hereinafter.

A foam molding resin composition of the disclosure contains a fluororesin (A); and a compound (B), the compound (B) having a crystallite size of greater than 100 Å determined by X-ray diffractometry and a volatilization amount at 330°C of 7.0% by mass or lower, the compound (B) dispersed in the fluororesin (A) with a distance between centroids of 5.0 μm or less.

In the foam molding resin composition of the disclosure, the compound (B) satisfying the above conditions functions as a foam nucleating agent. The compound (B) having a crystallite size of greater than 100 Å with a distance between centroids of 5.0 μm or less achieves small cell size in a foam-molded article and can increase the number of cells formed. Furthermore, the compound (B) having a volatilization amount at 330°C of 7.0% by mass or lower can suppress cell coalescence.

The fluororesin (A) may be a resin containing fluorine and is preferably a melt-moldable fluororesin. Examples of the melt-fabricable fluororesin include tetrafluoroethylene (TFE)/hexafluoropropylene (HFP) copolymers (FEP), TFE/-perfluoro(alkyl vinyl ether) (PAVE) copolymers (PFA), TFE/ethylene copolymers (ETFE), chlorotrifluoroethylene (CTFE)/ethylene copolymers (ECTFE), polyvinylidene fluoride (PVdF), polychlorotrifluoroethylene (PCTFE), TFE/vinylidene fluoride (VdF) copolymers (VT), polyvinyl fluoride (PVF), TFE/VdF/CTFE copolymers (VTC), TFE/ethylene/HFP copolymers, and TFE/HFP/VdF copolymers. One of them may be used alone or two or more of them may be used in combination.

Examples of the PAVE include perfluoro(methyl vinyl ether) (PMVE), perfluoro(ethyl vinyl ether) (PEVE), and perfluoro(propyl vinyl ether) (PPVE). PPVE is preferred. One of them may be used alone or two or more of them may be used in combination.

The fluororesin (A) may have an additional polymerized unit derived from another monomer in an amount that causes no deterioration in the essential properties of the respective fluororesins. Such an additional monomer can appropriately be selected from TFE, HFP, ethylene, propylene, perfluoro(alkyl vinyl ethers), perfluoroalkylethylenes, hydrofluoroolefins, fluoroalkylethylenes, perfluoro(alkyl allyl ethers), and the like. One of them may be used alone or two or more of them may be used in combination. Such a perfluoroalkyl group in the additional monomer preferably has 1 to 10 carbon atoms.

The additional monomer may be a monomer having a polar group. Examples of the monomer having a polar group include non-fluorinated monomers having a hydroxyl group such as hydroxyalkyl vinyl ethers including, for example, hydroxyethyl vinyl ether, hydroxypropyl vinyl ether, hydroxybutyl vinyl ether, hydroxyisobutyl vinyl ether, and hydroxycyclohexyl vinyl ether; non-fluorinated monomers having a carboxyl group such as acrylic acid, methacrylic acid, itaconic acid, succinic acid, fumaric acid, crotonic acid, maleic acid, citraconic acid, undecylenic acid, and acetylenedicarboxylic acid; non-fluorinated monomers having an acid anhydride residue such as itaconic anhydride (hereinafter also referred to as "IAH"), citraconic anhydride (hereinafter also referred to as "CAH"), 5-norbornene-2,3-dicarboxylic anhydride (hereinafter also referred to as "NAH"), succinic anhydride, fumaric anhydride, and maleic anhydride; non-fluorinated monomers having a sulfo group such as vinylsulfonic acid; non-fluorinated monomers having an epoxy group (glycidyl group) such as glycidyl vinyl ether and glycidyl allyl ether; non-fluorinated monomers having an amino group such as aminoalkyl vinyl ether and aminoalkyl allyl ether; non-fluorinated monomers having an amide group such as (meth) acrylamide and methylolacrylamide; non-fluorinated monomers having a nitrile group such as acrylonitrile and methacrylonitrile.

Because of their excellent heat resistance, the fluororesin (A) is preferably at least one selected from the group consisting of TFE/HFP copolymers and TFE/PAVE copolymers, and is more preferably a TFE/HFP copolymer. Because of its more excellent electrical properties, the fluororesin (A) is also preferably a perfluororesin.

The TFE/HFP copolymer preferably satisfies a TFE/HFP mass ratio of 80 to 97/3 to 20, more preferably 84 to 92/8 to 16.

The TFE/HFP copolymer may be a copolymer consisting of TFE and HFP, or may be a terpolymer consisting of TFE, HFP, and a comonomer copolymerizable with TFE and HFP (e.g., a TFE/HFP/PAVE copolymer).

The TFE/HFP copolymer is also preferably a TFE/HFP/PAVE copolymer including a polymerized unit derived from PAVE.

The TFE/HFP/PAVE copolymer preferably satisfies a TFE/HFP/PAVE mass ratio of 70 to 97/3 to 20/0.1 to 10, more preferably 81 to 92/5 to 16/0.3 to 5.

The TFE/PAVE copolymer preferably satisfies a TFE/PAVE mass ratio of 90 to 99/1 to 10, more preferably 92 to 97/3 to 8.

The TFE/ethylene copolymer preferably satisfies a TFE/ethylene mole ratio of 20 to 80/20 to 80, more preferably 40 to 65/35 to 60. The TFE/ethylene copolymer may include another monomer component.

In other words, the TFE/ethylene copolymer may be a copolymer consisting of TFE and ethylene, or may be a terpolymer consisting of TFE, ethylene, and a comonomer copolymerizable with TFE and ethylene (e.g., a TFE/ethylene/HFP copolymer).

The TFE/ethylene copolymer may also preferably be a TFE/ethylene/HFP copolymer including a polymerized unit derived from HFP. The TFE/ethylene/HFP copolymer preferably satisfies a TFE/ethylene/HFP mole ratio of 40 to 65/30 to 60/0.5 to 20, more preferably 40 to 65/30 to 60/0.5 to 10.

Here, the "melt-moldable" fluororesin preferably has a melt flow rate (MFR) of 1 to 100 g/10 min. The MFR of the fluororesin (A) is more preferably 5 to 70 g/10 min, still more preferably 10 to 60 g/10 min. In order to suppress the occurrence of sparks and increase the foaming ratio, the MFR is even more preferably 15 to 50 g/10 min, even more preferably 20 to 45 g/10 min, particularly preferably 30 to 45 g/10 min.

The MFR is a value determined in conformity with ASTM D1238 using a die having a diameter of 2.1 mm and a length of 8 mm at a temperature of 372°C and a load of 5 kg.

The fluororesin (A) may include a non-melt-moldable fluororesin together with the melt-moldable fluororesin. When the fluororesin (A) includes the non-melt-moldable fluororesin, it preferably contains 0.001 to 3.0% by mass of the non-melt-moldable fluororesin relative to the total amount of the fluororesin (A).

"Non-melt-moldable" herein means that the MFR is lower than 1 g/10 min. The MFR is preferably 0.1 g/10 min or lower.

Example of the non-melt-moldable fluororesin includes polytetrafluoroethylene (PTFE). The FEP, PFA, ETFE, PCTFE, and PVDF as examples of the melt-moldable fluororesin are also usable. One of them may be used alone or two or more of them may be used in combination. Preferred is the PTFE among them.

The FEP and the like are considered to be non-melt-moldable fluororesins when the MFR is less than 1 g/10 min, whereas they are considered to be melt-moldable fluororesins when the MFR is 1 g/10 min or higher.

In the disclosure, the PTFE may be a homopolymer of tetrafluoroethylene (TFE) or may be modified polytetrafluoroethylene (modified PTFE) obtained from TEF and a trace comonomer.

The TFE homopolymer can be obtained by polymerization of only tetrafluoroethylene (TFE) as a monomer. The trace comonomer in the modified PTFE may be any fluorine-containing compound that is copolymerizable with the TFE. Examples thereof include perfluoroolefins such as hexafluoropropylene (HFP); perfluorovinyl ethers (PFVEs) such as various PAVEs described above; fluorodioxole; trifluoroethylene; and vinylidene fluoride.

In the modified PTFE, usually, the percentage of the trace monomer units derived from the trace monomer is 0.001 to 1.0% by mass of all the monomer units.

Herein, "the percentage (% by mass) of the trace monomer units of all the monomer units" means the mass fraction (mass%) of the trace monomer from which the trace monomer units are derived in the total amount of the monomers from which "all the monomer units" are derived, i.e., the monomers constituting the fluorine-containing polymer.

From the perspectives of heat resistance and electrical properties, the PTFE preferably has a standard specific gravity (SSG) of 2.15 to 2.30, more preferably 2.25 or lower, still more preferably 2.22 or lower.

Though a high molecular weight PTFE having a SSG of lower than 2.15 still exhibits the effects of the disclosure, it is hard to produce and thus impractical.

The SSG is determined by the immersion method in conformity with ASTM D4895-89.

The PTFE having a low SSG can exhibit the effect of increasing biaxial elongational viscosity with a small amount thereof. The PTFE having a high SSG needs a larger amount to exhibit such an effect.

The PTFE can be synthesized by known methods such as emulsion polymerization and suspension polymerization. The polymerization method is preferably emulsion polymerization.

In the case where the foam molding resin composition of the disclosure contains agglomerates of the PTFE, frequent spark-outs occur while molding an electric wire coating, which may cause a higher defect rate. Thus, the PTFE preferably has an average primary particle size of 50 to 800 nm, more preferably 50 to 500 nm.

The average primary particle size of the PTFE is determined as follows: measuring the Feret diameters of the PTFE in a transmission electron microscope image to determine the number-based length average primary particle size; diluting polymer latex with water to a solid content of 0.22% by mass; measuring the transmittance of 500-nm light relative to the unit length of the diluted latex; based on these values, obtaining a calibration curve, by which the average primary particle size of the PTFE is determined.

The fluororesin (A) can be synthesized by polymerizing monomer components through a usual polymerization method, such as emulsion polymerization, suspension polymerization, solution polymerization, bulk polymerization, or gas phase polymerization. In the polymerization reaction, a chain transfer agent such as methanol may be used in some cases. The fluororesin (A) may be produced by polymerization and isolation without a metal-ion-containing reagent.

The fluororesin (A) is not limited, but it may have an end group such as $-CF_3$ or $-CF_2H$ on at least one of the polymer main chain or a side chain. The fluororesin (A) preferably has a $-CF_3$ end group. The fluororesin having these end groups is obtainable by fluorination.

Non-fluorinated fluororesins may have a thermally and electrically unstable end group (hereinafter, such an end group is also referred to as an "unstable end group") such as -COOH, $-CH_2OH$, -COF, and $-CONH_2$. These unstable end groups can be reduced by the fluorination. The fluororesin (A) preferably includes a small number of unstable end groups or no such groups. More preferably, the total number of the above-exemplified four species of unstable end groups and $-CF_2H$ end groups is 50 or less per $1 \times 10^6$ carbon atoms. More than 50 unstable end groups may cause molding defects. The number of unstable end groups is more preferably 20 or less, still more preferably 10 or less.

The number of unstable end groups herein is a value determined by infrared absorption spectrometry. The fluororesin (A) may have neither unstable end groups nor $-CF_2H$ end groups, and all the end groups therein may be $-CF_3$ end groups.

The fluorination can be achieved by bringing a non-fluorinated fluororesin into contact with a fluorine-containing compound.

The fluorine-containing compound may be any such compound, and examples thereof include fluorine radical sources that generate fluorine radicals under the fluorination conditions. Examples of the fluorine radical source include $F_2$ gas, $CoF_3$, $AgF_2$, $UF_6$, $OF_2$, $N_2F_2$, $CF_3OF$, and halogen fluorides (e.g., $IF_5$, $ClF_3$). One of them may be used alone or two or more of them may be used in combination.

The concentration of the fluorine radical source such as $F_2$ gas may be 100%. However, the fluorine radical source is preferably diluted with an inert gas to 5 to 50% by mass, more preferably 15 to 30% by mass. Examples of the inert gas include nitrogen gas, helium gas, and argon gas. In order to save the cost, nitrogen gas is preferred.

The fluorination can be performed under any conditions. A molten fluororesin may be brought into contact with a fluorine-containing compound. Still, the fluorination is usually performed at a temperature of not higher than the melting point of the fluororesin, preferably 20°C to 220°C, more preferably 100°C to 200°C. The fluorination is usually performed for 1 to 30 hours, preferably 5 to 20 hours.

The fluorination is preferably achieved by bringing a non-fluorinated fluororesin into contact with a fluorine gas ($F_2$ gas).

The fluororesin (A) is not limited. In order to obtain a foam-molded article having excellent heat resistance and a wide continuous use temperature range, the fluororesin (A) preferably has a melting point of 200°C or higher, a molding temperature of 250°C or higher, and a thermal decomposition temperature of 300°C or higher. Furthermore, the melting point is more preferably 250°C or higher, and preferably 320°C or lower. The molding temperature is more preferably 300°C or higher, and preferably 450°C or lower. The thermal decomposition temperature is more preferably 350°C or higher, still more preferably 400°C or higher. The upper limit of each the melting point, molding temperature, and thermal decomposition temperature is 600°C or lower.

Herein, the melting point is the temperature measured using a differential scanning calorimeter (DSC). The molding temperature is the generally recommended temperature for molding, at which the resin has fluidity and causes no resin deterioration such as coloration. The thermal decomposition temperature is the 1% weight loss temperature when the resin is heated at 10°C/min in the air by the thermogravimetric analysis (TG). It excludes weight loss due to volatilization of contained water or crystal water that occurs at 100°C to 200°C. The resin having "fluidity" means that it has a MFR of 0.0001 or higher at the temperature.

In order to reduce signal loss in communication cables, the fluororesin (A) preferably has a permittivity of 3.0 or lower, more preferably 2.5 or lower, still more preferably 2.3 or lower, most preferably 2.1 or lower. The lower limit thereof is 1.0 or higher. Similarly, the resin preferably has a dissipation factor of 0.01 or lower, more preferably 0.002 or lower, still more preferably 0.001 or lower, most preferably 0.0005 or lower. The lower limit thereof is 0.0001 or higher. The permittivity and dissipation factor of the fluororesin (A) are measured by a cavity resonator method at a frequency of 6 GHz.

The foam molding resin composition preferably contains 80% by mass or more of the fluororesin (A), more preferably 90% by mass or more, still more preferably 95% by mass or more, particularly preferably 97% by mass or more. The upper limit of the amount is preferably 99.99% by mass or less, more preferably 99.85% by mass or less, still more preferably less than 99.85% by mass.

The foam molding resin composition of the disclosure may contain a resin different from the fluororesin (A). Examples thereof include general-purpose resins such as polyethylene resin, polypropylene resin, vinyl chloride resin, and polystyrene resin; and engineering plastics such as nylon, polycarbonate, polyether ether ketone resin, polyphenylene sulfide resin, polyarylether ketone (PAEK), polyether ketone ketone (PEKK), polyether ketone (PEK), polyether ether ketone ketone (PEEKK), polyethersulfone (PES), liquid crystal polymer (LCP), polysulfone (PSF), amorphous polyarylate (PAR), polyethernitrile (PEN), thermoplastic polyimide (TPI), polyimide (PI), polyetherimide (PEI), and polyamide-imide (PAI). One of them may be used alone or two or more of them may be used in combination.

The foam molding resin composition preferably contains 10% by mass or less of the resin different from the fluororesin (A), more preferably 5% by mass or less, still more preferably 1% by mass or less. The lower limit of the amount is not limited, and it may be 0% by mass, for example.

The foam molding resin composition of the disclosure contains a compound (B) as a foam nucleating agent.

The compound (B) only needs to have a crystallite size of greater than 100 Å determined by X-ray diffractometry (XRD). The crystallite size is preferably greater than 140 Å, more preferably greater than 200 Å. This allows for the formation of an optimal crystal lattice with less distortion, enhancing foam formation. The upper limit of the crystallite size is preferably 10,000 Å or smaller, more preferably 5,000 Å or smaller, still more preferably 1,000 Å or smaller.

The powder sample is measured by XRD under the following conditions:

XRD device: SmartLab, available from Rigaku Holdings Corporation
Measurement and analysis software: SmartLab Studio II
X-ray source: Cu Kα with a wavelength of 1.54 Å
Diffraction angle (2Θ): 5° to 90°

The crystallite size is calculated by the Scherrer equation with the largest half width of the obtained diffraction peak(s).

$$D = K \times \lambda/(\beta \times \cos\Theta) \cdot\cdot\cdot \text{Scherrer equation}$$

D: Crystallite size (Å)
K: Scherrer constant
$\lambda$: X-ray wavelength (Å)
$\beta$: Half width of diffraction peak (rad)
$\Theta$: Half of the diffraction angle (rad)

$$\text{Scherrer constant (K)} = 0.94$$

$$\text{X-ray wavelength } (\lambda) = 1.5418$$

When the obtained diffraction spectrum has no diffraction peaks derived from a crystallite structure, the compound is determined to have no crystallite structure.

The compound (B) only needs to have a volatilization amount at 330°C of 7.0% by mass or lower. The volatilization amount is preferably 5.0% by mass or lower, more preferably 3.0% by mass or lower, particularly preferably 1.0% by mass or lower. Such volatilization amounts can suppress the occurrence of residues (deposits) which cause molding defects, and thus allows for extended molding such as wire molding. The lower limit of the volatilization amount is not limited and may be 0% by mass.

Mass loss of a sample is measured after being kept at 330°C for one hour in an electric furnace to calculate the volatilization amount by the formula (Mass loss/Mass before keeping × 100).

The compound (B) only needs to be dispersed in the fluororesin (A) with a distance between centroids of 5.0 $\mu$m or less. The upper limit of the distance is preferably 3.0 $\mu$m or less, more preferably 2.0 $\mu$m or less. The lower limit thereof is preferably 0.01 $\mu$m or greater, more preferably 0.1 $\mu$m or greater, still more preferably 0.5 $\mu$m or greater.

In order to form more uniform cells, the compound (B) is preferably dispersed in the fluororesin (A) at a density of 15,000 particles/mm$^2$ or more. The lower limit of the density is more preferably 30,000 particles/mm$^2$ or more, still more preferably 120,000 particles/mm$^2$ or more. The upper limit thereof is preferably 10,000,000 particles/mm$^2$ or less, more preferably 5,000,000 particles/mm$^2$ or less, still more preferably 1,000,000 particles/mm$^2$ or less.

In order to form more uniform cells, the compound (B) is preferably dispersed in the fluororesin (A) with a particle size of 4.0 $\mu$m or less. The upper limit of the particle size is more preferably 3.0 $\mu$m or less, still more preferably 2.0 $\mu$m or less. The lower limit thereof is preferably 0.001 $\mu$m or greater, more preferably 0.01 $\mu$m or greater, still more preferably 0.1 $\mu$m or greater.

A cross-sectional image of a resin composition containing the fluororesin (A) and the compound (B) is taken using a laser microscope (shape analysis laser microscope (VK-X1000), available from Keyence Corporation) at a 150-fold magnification. Then, the image is subjected to image processing to determine dispersed states (distance between centroids, density, and particle size) of the compound (B) in the fluororesin (A). The particle size and distance between centroids are each calculated as an average of 100 particles.

Examples of the compound (B) may be any compound that satisfies the above conditions. Examples of the compound (B) may include a cyclic tetrapyrrole compound, barium sulfate, silicon dioxide, and aluminum oxide. One of them may be used alone or two or more of them may be used in combination. Among them, the compound (B) includes preferably at least one selected from the group consisting of a cyclic tetrapyrrole compound, barium sulfate, silicon dioxide, and aluminum oxide, more preferably a cyclic tetrapyrrole compound.

Yet, the type of component does not matter. What matters is satisfying the above conditions. The compounds (B) containing the same components may exhibit varying effects depending on their crystal states, dispersed states, and volatilization amounts. The following are the key requirements for the compound (B): crystallite size of greater than 100 Å determined by X-ray diffractometry (XRD) (crystal state); dispersed in the fluororesin (A) with distance between centroids of 5.0 $\mu$m or less (dispersed state); and volatilization amount at 330°C of 7.0% by mass or lower (volatilization amount).

The cyclic tetrapyrrole compound is classified into three types, or phthalocyanine, chlorin, and bacteriochlorin, based on its skeleton. The cyclic tetrapyrrole compound can form a complex with metal. Examples of metal include copper, iron, and magnesium.

In order to function well as a foam nucleating agent, the cyclic tetrapyrrole compound preferably has a phthalocyanine skeleton. The cyclic tetrapyrrole compound is more preferably a metal phthalocyanine, still more preferably copper phthalocyanine.

At the molding temperature during foam molding, the compound (B) is preferably undecomposed, insoluble in the fluororesin (A) and unmelted. In other words, the compound (B) preferably remains solid in the foam molding resin composition of the disclosure during foam molding. This enables the compound to function sufficiently as a foam nucleating agent.

Whether the compound (B) satisfies this condition can be confirmed by observing whether the compound (B) remains solid when heated to the predetermined temperature using a polarization microscope with a hot stage.

The compound (B) preferably has a melting temperature (melting point) of 300°C or higher, more preferably 320°C or higher, still more preferably 350°C or higher. Within this range, the compound is unlikely to melt even at the molding temperature during foam molding and thus can sufficiently function as a foam nucleating agent. The upper limit of the melting temperature is not limited, but it is preferably 1,000°C or lower.

The compound (B) preferably has a thermal decomposition temperature of 270°C or higher, more preferably 320°C or higher, still more preferably 350°C or higher. Within this range, the compound is unlikely to decompose even at the molding temperature during foam molding. Therefore, the compound can reduce adverse effects (such as lower electrical properties, cell rupture, and coating breakage during electric wire molding) caused by its decomposition. The upper limit of the thermal decomposition temperature is not limited, but it is preferably 1,000°C or lower.

The melting temperature (melting point) and thermal decomposition temperature of the compound (B) can be determined by the same method as mentioned for the fluororesin (A) above.

The foam molding resin composition of the disclosure preferably contains 0.1 parts by mass or more of the compound (B) relative to 100 parts by mass of the fluororesin (A), more preferably 0.3 parts by mass or more, still more preferably 0.5 parts by mass or more. The composition also preferably contains 20 parts by mass or less of the compound, more preferably 5.0 parts by mass or less, still more preferably 2.0 parts by mass or less. Too small an amount of the compound (B) may result in insufficient effects of its addition. Too large an amount thereof may increase production costs.

The foam molding resin composition of the disclosure may contain a foam nucleating agent other than the compound (B). Examples thereof may be any foam nucleating agent that fails to satisfy the above conditions. Examples thereof include boron nitride, sodium 2,2'-methylenebis(4,6-di-t-butylphenyl) phosphate, fluorooctanesulfonic acid barium salts, bisphenol phosphoric diester barium salts, N,N'-dicyclohexyl-2,6-naphthalene dicarboxamide, sodium benzenephosphonate, 2,6-naphthalene dicarboxylic acid, 1,3:2,4-bis-O-(4-methylbenzylidene)-D-sorbitol, N,N'-dioctadecylisophthalamide, sodium benzoate, sodium bis(4-nitrophenyl) phosphate, triaminobenzene derivatives, 1,3,5-tris (2,2-dimethylpropionylamino)-benzene, pigment red 254, talc, binaphthyl phosphoric acid sodium salts, t-butyl-binaphthyl phosphoric acid barium salts, rosin metal salts, condensed phosphate ester. Other examples include sulfonic acid, sulfonic acid salts, phosphonic acid, phosphonic acid salts, zeolite, azodicarbonamide (ADCA), N,N'-dinitropentamethylenetetramine (DPT), 4,4'-oxybis benzenesulfonyl hydrazide (OBSH). One of them may be used alone or two or more of them may be used in combination.

The foam molding resin composition of the disclosure may further contain a polyatomic anion-containing inorganic salt in an amount that does not impair the effects of the disclosure.

Examples of the polyatomic anion-containing inorganic salt include those described in US 4,764,538 A.

The foam molding resin composition of the disclosure may contain a conventionally known filler in an amount that does not impair the effects of the disclosure.

Examples of the filler include graphite, carbon fiber, coke, silica, zinc oxide, magnesium oxide, magnesium sulfate, tin oxide, antimony oxide, calcium carbonate, magnesium carbonate, magnesium hydroxide, glass, talc, mica, mica, aluminum nitride, calcium phosphate, sericite, diatomite, silicon nitride, fine silica, fumed silica, alumina, zirconia, quartz powder, kaolin, bentonite, and titanium oxide. One of them may be used alone or two or more of them may be used in combination. The filler may be in any form. For example, the filler may be in the form of fibers, needles, columns, whiskers, flat plates, layers, scales, balloons, porous material, chopped fibers, powder, particles, beads, or the like. The filler is different from the boron nitride mentioned above for the foam nucleating agent.

The foam molding resin composition of the disclosure may further contain any other components such as additives. Examples of such components include fillers such as glass fiber, glass powder, asbestos fiber, cellulose fiber, and carbon fiber, reinforcing agents, stabilizers, lubricants, pigments, flame retarders, and other additives.

Too large an amount of the low molecular weight fluorocompound may plasticize resin in the molten state when molded, resulting in the occurrence of many sparks. Preferably, the foam molding resin composition of the disclosure substantially contains no low molecular weight fluorocompound.

Herein, "substantially contains no low molecular weight fluorocompound" means that the amount of the compound is 10 ppm by mass or less in the composition.

The low molecular weight fluorocompound can be any fluorocompound having a molecular weight of 1000 or less, for example. Specific examples of one include perfluoroalkyl acid or perfluorosulfonic acid. More specifically, examples include $C_8F_{17}COOH$ and salts thereof, $C_7F_{15}COOH$ and salts thereof, $C_6F_{13}COOH$ and salts thereof, $C_8F_{17}SO_3H$ and salts thereof, $C_6F_{13}SO_3H$ and salts thereof, $C_4F_9SO_3H$ and salts thereof, $C_8F_{17}CH_2CH_2\text{-}SO_3H$ and salts thereof, $C_6F_{13}CH_2CH_2\text{-}SO_3H$ and salts thereof, $C_8F_{17}CH_2CH_2OH$, and $C_6F_{13}CH_2CH_2OH$, still more specifically $\{F(CF_2)_6CH_2CH_2SO_3\}_2Ba$.

The amount of the low molecular weight fluorocompound can be determined by the following method: crushing samples by cryo-milling; dispersing the resulting powder in methanol, followed by extraction under ultrasonic irradiation at 60°C for two hours; and quantifying the extract using a liquid chromatograph-mass spectrometer (LC-MS/MS) to determine the amount of the low molecular weight fluorocompound.

The foam molding resin composition of the disclosure preferably has a melt flow rate (MFR) of 1 to 100 g/10 min. The MFR is more preferably 5 to 70 g/10 min, still more preferably 10 to 60 g/10 min. In order to suppress the occurrence of sparks and increase the foam content, the MFR is further preferably 15 to 50 g/10 min, even more preferably 20 to 45 g/10 min, particularly preferably 30 to 45 g/10 min.

The MFR is a value determined in conformity with ASTM D1238 using a die having a diameter of 2.1 mm and a length of 8 mm at a load of 5 kg and a temperature of 372°C.

In order to reduce signal loss in communication cables, the foam molding resin composition of the disclosure preferably has a permittivity of 3.0 or lower, more preferably 2.5 or lower, still more preferably 2.3 or lower, most preferably 2.1 or lower. The lower limit thereof is 1.0 or higher. Similarly, the resin preferably has a dissipation factor of 0.01 or lower, more preferably 0.002 or lower, still more preferably 0.001 or lower, most preferably 0.0005 or lower. The lower limit thereof is 0.0001 or higher.

The permittivity and the dissipation factor of the foam molding resin composition of the disclosure are measured using the resin composition before foam molding by a cavity resonator method at a frequency of 6 GHz.

The foam molding resin composition of the disclosure can suitably be used as a foamable composition. Especially, the composition can be suitably used as a composition for forming covering layers of electric wires.

A method for producing a foam-molded article of the disclosure includes foam molding (preferably batch foam molding) the foam molding resin composition of the disclosure.

A foam-molded article of the disclosure is formed using the foam molding resin composition of the disclosure.

In batch foam molding where fluororesin needs to be formed at high temperatures, a foam nucleating agent which enables the formation of fine cells has been rarely used. The foam molding resin composition of the disclosure enables the formation of fine cells even in batch foam molding of fluororesin.

The foam molding resin composition of the disclosure can be foam-molded by any conventionally known method. For example, the foam molding resin composition of the disclosure is charged into a screw extruder designed for foaming operations, and then a continuous gas extrusion method is performed. For another example, a preformed foam molding resin composition of the disclosure is introduced into a pressure vessel and heated to the predetermined temperature (melting point thereof or higher), and then a batch foaming method is performed, where the sufficiently gas-impregnated resin composition is rapidly depressurized by releasing the pressure.
Examples of the gas used in the gas extrusion method and batch foaming method include gases of chlorodifluoromethane, nitrogen, and carbon dioxide, and any mixtures of these gases. The gas in the form of a pressurized gas may be introduced into the molten resin in the extruder or into the pressure vessel, or the gas may be generated by mingling a chemical foaming agent into the molten resin or into the preformed foam molding resin composition. The introduced gas dissolves into the molten resin in the extruder or into the resin in the pressure vessel.

When the molten material is extruded through an extrusion die or is depressurized by releasing the pressure from the pressure vessel, the gas dissolved in the resin is released from the molten material in response to this rapid decrease of pressure. The material extruded through the extruder is then, for example, put into water to be cooled down and solidified. In the batch foaming method, the resin is cooled down and solidified by cooling the pressure vessel.

The foam-molded article of the disclosure has a low permittivity, a stable capacitance, and a light weight, thus it can provide a covering material to be mentioned later having stable dimensions such as the wire diameter and the thickness. Furthermore, it can provide an insulating layer having stable dimensions such as the thickness.

The total volume of the cells in the foam-molded article of the disclosure can appropriately be adjusted so as to fit the use thereof by, for example, adjusting the amount of gas introduced into the extruder or selecting the type of gas to be dissolved.

The foam-molded article of the disclosure can be produced as a molded material extruded through the extruder so as to have a shape that fits the use thereof. The molding method can be any heat melt molding, and examples thereof include extrusion foam molding, injection foam molding, mold foam molding and batch foam molding.

The foam-molded article of the disclosure can have any shape. For example, it can be formed into any of various shapes, including the covering materials such as foamed electric wires; filament-like shapes such as the shapes of wire rods; sheet-like shapes; film-like shapes; rod-like shapes; and pipe-like shapes. Examples of the use of the foam-molded article include electrical insulating materials; heat insulating materials; sound insulating materials; light-weight structural materials such as floating materials; and cushioning materials such as cushions. The foam-molded article can particularly suitably be used as a covering material for foamed electric wires.

Preferably, the resulting foam-molded article contains a melt-solidified matter of the foam molding resin composition of the disclosure and cells, and the cells are uniformly distributed in the melt-solidified matter. The cells may have any cell size, and the cell size is preferably 60 $\mu$m or smaller, more preferably 30 $\mu$m or smaller, for example. The cell size is also preferably 0.1 $\mu$m or greater.

A cell in the foam-molded article of the disclosure may be either an open cell or closed cell, with the latter being preferred. The closed cell is excellent in terms of rebound force against external pressure, rigidity, shock absorption, and processability. The closed cell also advantageously prevents inflow of moisture into the cell.

The closed cell can be formed by any conventionally known method in addition to the aforementioned heat melt molding.

Since the foam-molded article of the disclosure has a foamed state advantageous in reducing permittivity, it can be used as correlated insulators such as insulating layers for electric wires, semiconductor package substrates, transformers, circuit boards, motors, reactors, transistors, printed circuit boards, semiconductor devices, and electric parts. Especially, the foam-molded article can be suitably insulating layers (covering layers) for electric wires.

It should be appreciated that a variety of modifications and changes in the structure and other details may be made to the aforementioned embodiments without departing from the spirit and scope of the claims.

EXAMPLES

The disclosure is described in more detail below with reference to examples, but is not limited to these examples.

The properties herein were determined by the following methods.

(Measurement of number of unstable end groups)

A pellet was rolled with a hydraulic press to prepare a film of approximately 0.3 mm thickness. The film was analyzed using a FT-IR Spectrometer 1760X (available from PerkinElmer).

A difference spectrum was obtained between the resulting spectrum and a base spectrum (spectrum where a sample was sufficiently fluorinated until no substantial difference could be observed anymore). The absorbance of each absorption peak was determined. The number of unstable end groups per $1 \times 10^6$ carbon atoms was calculated based on

the following formula.

$$\text{Number of unstable end groups per } 1 \times 10^6 \text{ carbon atoms} = (I \times K)/t$$

(I: Absorbance, K: Correction coefficient, t: Thickness of film (mm))

The correction coefficient (K) of each unstable end group is described below.

| | |
|---|---|
| -COF (1884 cm$^{-1}$) | 405 |
| -COOH (1813 cm$^{-1}$, 1775 cm$^{-1}$) | 455 |
| -COOCH$_3$ (1795 cm$^{-1}$) | 355 |
| -CONH$_2$ (3438 cm$^{-1}$) | 480 |
| -CH$_2$OH (3648 cm$^{-1}$) | 2325 |

(Measurement of number of -CF$_2$H end groups)

Measurement by $^{19}$F-NMR was performed using a nuclear magnetic resonance device AC300 (available from Bruker-Biospin) with the measurement temperature set at (melting point of fluororesin (A) + 20°C). The number was determined from integral value of the peak due to the presence of -CF$_2$H groups and integral values of other peaks.

(SSG)

The SSG was determined by the immersion method in conformity with ASTM D4895-89.

(Melting point)

The melting point was a temperature corresponding to the peak in the measurement using a DSC (RDC220, available from Seiko Instruments Inc.) at a temperature-increasing rate of 10°C/min.

(Thermal decomposition temperature)

The 1% weight loss temperature when heated at 10°C/min in the air by TG was measured.

(MFR)

The MFR was a value determined in conformity with ASTM D1238 using a KAYENESS Series 4000 melt indexer (YASUDA SEIKI SEISAKUSHO, LTD.) and a die having a diameter of 2.1 mm and a length of 8 mm at a temperature of 372°C and a load of 5 kg.

The examples and the comparative examples were performed by the following methods.

(Preparation of FEP pellet)

A fluorinated FEP pellet was prepared by the same method as described in Example 2 in JP 2011-514407 T. The obtained pellet (TFE/HFP/PPVE copolymer) had a mass ratio of TFE/HFP/PPVE of 87.8/11.2/1.0, a melting point of 255°C, an MFR of 23 g/10 min, and a total number of the unstable end groups and -CF$_2$H end groups of 3 per $1 \times 10^6$ carbon atoms.

(Preparation of pellet for batch foaming test (Step 1))

FEP pellets (MFR: 38 g/10 min) was mixed with an additive to achieve the target concentration and was kneaded at 300°C for 10 minutes using a Labo Plastomill to prepare a compound. The collected compound was cut to undergo extrusion at 300°C and a load of 5 kg using a melt indexer. The extruded strand was pelletized by cutting into 2 to 3 mm lengths.

A cross-sectional image of the produced pellet was taken using a laser microscope (shape analysis laser microscope (VK-X1000), available from Keyence Corporation) at a 150-fold magnification. Then, the image was subjected to image processing to determine distance between centroids, particle density, and particle size of the nucleating agent particles. The particle size and distance between centroids were each calculated as an average of 100 particles.

(Batch foaming test (Step 2))

A pressure vessel having an inner capacity of approximately 11 cm$^3$ was sufficiently preheated in an electric furnace at 270°C. A 0.4 g pellet, wrapped in aluminum foil, was encapsulated in the vessel and returned to the electric furnace. Up to three samples of pellets were simultaneously encapsulated in a single test. The sample was pressurized at 3 MPa with nitrogen gas and kept for 60 min, then followed by rapid (within a second) depressurization to atmospheric pressure, allowing the resin to foam. The obtained foam-molded article maintained its pellet shape. The article was also in a foamed state (i.e. not in a state in which only cracks were formed).

A SEM cross-sectional image of the foam-molded article was taken and subjected to image processing to determine the number of cells per unit area. The ratio of this value to the number of cells obtained from an additive-free resin using the same procedure was defined as the cell density index per unit area. Additionally, the average area per unit cell was calculated. The ratio of this value to the average area obtained from an additive-free resin using the same procedure was defined as the average cell area index.

(Crystallite size)

The powder sample was measured by XRD under the following conditions:

XRD device: SmartLab, available from Rigaku Holdings Corporation
Measurement and analysis software: SmartLab Studio II
X-ray source: Cu Kα with a wavelength of 1.54 Å
Diffraction angle (2Θ): 5° to 90°

The crystallite size was calculated by the Scherrer equation with the largest half width of the obtained diffraction peak(s).

$$D = K \times \lambda/(\beta \times \cos\Theta) \cdots \text{Scherrer equation}$$

D: Crystallite size (Å)
K: Scherrer constant
λ: X-ray wavelength (Å)
β: Half width of diffraction peak (rad)
Θ: Half of the diffraction angle (rad)

$$\text{Scherrer constant (K)} = 0.94$$

$$\text{X-ray wavelength } (\lambda) = 1.5418$$

When the obtained diffraction spectrum had no diffraction peaks derived from a crystallite structure, the compound was determined to have no crystallite structure, and its crystallite size was designated as "no peaks".

(Volatilization test)

Mass loss of a sample (additive) is measured after being kept at 330°C for one hour in an electric furnace to calculate the volatilization amount by the formula (Mass loss/Mass before keeping × 100).

(Amount of low molecular weight fluorocompound)

A sample was crushed by cryo-milling. The resulting powder was dispersed in methanol, followed by extraction under ultrasonic irradiation at 60°C for two hours. The extract was quantified using a liquid chromatograph-mass spectrometer (LC-MS/MS) to determine the amount of the low molecular weight fluorocompound.

(Permittivity and dissipation factor)

The permittivity and the dissipation factor of the pellet for batch foaming test (resin composition before foaming) having target additive concentration were measured by a cavity resonator method at a frequency of 6 GHz.

(State of compound (B) at molding temperature)

Using a polarization microscope with a hot stage, the compound (B) was observed to see whether it remains solid when heated to the predetermined temperature.

Example 1

According to Step 1, a pellet was prepared by adding 1 part by mass of copper phthalocyanine (melting point: no peaks observed at 350°C or lower, thermal decomposition temperature: 388°C, crystallite size: 103 Å, volatilization amount in the volatilization test: 0.4% by mass, available from Tokyo Chemical Industry Co., Ltd.) relative to 100 parts by mass of FEP pellets. According to Step 2, a foam molded article was obtained. The particles of the additive, dispersed in the resulting pellet in Step 1, had a distance between centroids of 1.6 $\mu$m. In the batch foaming test in Step 2, the cell density index per unit area was favorably 21.
Furthermore, no low molecular weight fluorocompounds were detected in the pellet used or in the foam-molded article prepared. The same was true for the examples and comparative examples described below.
At the molding temperature during foam molding, the copper phthalocyanine was undecomposed, insoluble in FEP and unmelted.
A SEM cross-sectional image of the foam-molded article confirmed the formation of closed cells. The same was true for the examples and comparative examples described below.

Example 2

A foam-molded article was prepared by the same method as in Example 1 except that Shirasu balloon (SSW-40, principal components: silicon dioxide and aluminum oxide, melting point: no peaks observed at 350°C or lower, thermal decomposition temperature: 600°C or higher, crystallite size: 672 Å, volatilization amount in the volatilization test: 0.0%, available from Zanwers Co., Ltd.) was used as an additive. The particles of the additive, dispersed in the resulting pellet in Step 1, had a distance between centroids of 2.9 $\mu$m. In the batch foaming test in Step 2, the cell density index per unit area was favorably 13.
At the molding temperature during foam molding, the Shirasu balloon was undecomposed, insoluble in FEP and unmelted.

Example 3

A foam-molded article was prepared by the same method as in Example 1 except that precipitated barium sulfate (P-30, melting point: no peaks observed at 350°C or lower, thermal decomposition temperature: 600°C or higher, crystallite size: 309 Å, volatilization amount in the volatilization test: 0.0%, available from Takehara Kagaku Kogyo Co., Ltd.) was used as an additive. The particles of the additive, dispersed in the resulting pellet in Step 1, had a distance between centroids of 2.8 $\mu$m. In the batch foaming test in Step 2, the cell density index per unit area was favorably 13.
At the molding temperature during foam molding, the precipitated barium sulfate was undecomposed, insoluble in FEP and unmelted.

Example 4

A foam-molded article was prepared by the same method as in Example 1 except that baryte powder (W-6, principal component: barium sulfate, melting point: no peaks observed at 350°C or lower, thermal decomposition temperature: 600°C or higher, crystallite size: 153 Å, volatilization amount in the volatilization test: 0.0%, available from Takehara Kagaku Kogyo Co., Ltd.) was used as an additive. The particles of the additive, dispersed in the resulting pellet in Step 1, had a distance between centroids of 2.9 $\mu$m. In the batch foaming test in Step 2, the cell density index per unit area was favorably 12.
At the molding temperature during foam molding, the baryte powder was undecomposed, insoluble in FEP and unmelted.

Comparative Example 1

A foam-molded article was prepared by the same method as in Example 1 except that boron nitride (MGP, crystallite size: 158 Å, volatilization amount in the volatilization test: 0.0%, available from Denka Company Limited) was used as an additive. The particles of the additive, dispersed in the resulting pellet in Step 1, had a distance between centroids of 5.9 $\mu$m. In the batch foaming test in Step 2, the cell density index per unit area was as low as 7.3.

Comparative Example 2

A foam-molded article was prepared by the same method as in Example 1 except that sodium benzoate (crystallite size: 131 Å, volatilization amount in the volatilization test: 0.0%, available from FUJIFILM Wako Pure Chemical Corporation) was used as an additive. The particles of the additive, dispersed in the resulting pellet in Step 1, had a distance between centroids of 6.2 $\mu$m. In the batch foaming test in Step 2, the cell density index per unit area was as low as 5.4.

Comparative Example 3

A foam-molded article was prepared by the same method as in Example 1 except that pigment red 254 (crystallite size: 89 Å, volatilization amount in the volatilization test: 0.4%, available from Tokyo Chemical Industry Co., Ltd.) was used as an additive. The particles of the additive, dispersed in the resulting pellet in Step 1, had a distance between centroids of 2.2 $\mu$m. In the batch foaming test in Step 2, the cell density index per unit area was as low as 3.1.

Comparative Example 4

A foam-molded article was prepared by the same method as in Example 1 except that talc (PAOG-2, crystallite size: 37 Å, volatilization amount in the volatilization test: 0.0%, available from Tokyo Chemical Industry Co., Ltd.) was used as an additive. The particles of the additive, dispersed in the resulting pellet in Step 1, had a distance between centroids of 5.1 $\mu$m. In the batch foaming test in Step 2, the cell density index per unit area was as low as 4.6.

Comparative Example 5

A foam-molded article was prepared by the same method as in Example 1 except that a rosin metal salt (PLAFIT H510H, no peaks observed by XRD, volatilization amount in the volatilization test: 10.6% by mass, available from Arakawa Chemical Industries, Ltd.) was used as an additive. The particles of the additive, dispersed in the resulting pellet in Step 1, had a distance between centroids of 4.2 $\mu$m. In the batch foaming test in Step 2, the cell density index per unit area was as low as 0.4.

Comparative Example 6

A foam-molded article was prepared by the same method as in Example 1 except that a condensed phosphate ester (SR-3000, no peaks observed by XRD, volatilization amount in the volatilization test: 8.1% by mass, available from Daihachi Chemical Industry Co., Ltd.) was used as an additive. The particles of the additive, dispersed in the resulting pellet in Step 1, had a distance between centroids of 4.1 $\mu$m. In the batch foaming test in Step 2, the cell density index per unit area was as low as 0.2.

Comparative Example 7

A foam-molded article was prepared by the same method as in Example 1 except that it was additive-free. The cell density index per unit area in the batch foaming test using this foam-molded article was taken as 1.0. The average cell area index of this was taken as 1.00.

[Table 1]

| | Additive | Crystallinity | Dispersed state | | | Volatility | Foamability | | Electric properties | |
| | | Crystallite size | Distance between centroids | Particle density | Particle size | Volatilization amount | Cell density index per unit area | Average cell area index | Permittivity | Dissipation factor |
| | | Å | μm | particles/mm² | μm | % by mass | | | (6 GHz) | (6 GHz) |
| Example 1 | Copper phthalocyanine | 103 | 1.6 | 183772 | 1.1 | 0.4 | 21 | 0.10 | 2.0 | 0.0003 |
| Example 2 | Shirasu balloon | 672 | 2.9 | 37520 | 0.8 | 0.0 | 13 | 0.12 | Unmeasured | Unmeasured |
| Example 3 | Precipitated barium sulfate | 309 | 2.8 | 55694 | 2.5 | 0.0 | 13 | 0.08 | 2.2 | 0.0024 |
| Example 4 | Baryte powder | 153 | 2.9 | 40891 | 3.8 | 0.0 | 12 | 0.11 | 2.2 | 0.0005 |
| Comparative Example 1 | Boron nitride | 158 | 5.9 | 12751 | 6.3 | 0.0 | 7.3 | 0.21 | 2.0 | 0.0003 |
| Comparative Example 2 | Sodium benzoate | 131 | 6.2 | 6449 | 18.6 | 0.0 | 5.4 | 0.24 | 2.0 | 0.0004 |
| Comparative Example 3 | Pigment red 254 | 89 | 2.2 | 111681 | 2.1 | 0.4 | 3.1 | 0.74 | 2.0 | 0.0003 |
| Comparative Example 4 | Talc | 37 | 5.1 | 14803 | 3.4 | 0.0 | 4.6 | 0.38 | 2.0 | 0.0003 |
| Comparative Example 5 | Rosin metal salt | No peaks | 4.2 | 19933 | 2.4 | 10.6 | 0.4 | 4.27 | 2.0 | 0.0007 |
| Comparative Example 6 | Condensed phosphate ester | No peaks | 4.1 | 22131 | 2.9 | 8.1 | 0.2 | 7.43 | 2.0 | 0.0004 |
| Comparative Example 7 | Additive-free | - | - | - | - | - | 1.0 | 1.00 | 2.0 | 0.0003 |

**Claims**

1.  A foam molding resin composition comprising:

    a fluororesin (A); and
    a compound (B),
    the compound (B) having a crystallite size of greater than 100 Å determined by X-ray diffractometry and a volatilization amount at 330°C of 7.0% by mass or lower,
    the compound (B) dispersed in the fluororesin (A) with a distance between centroids of 5.0 μm or less.

2.  The foam molding resin composition according to claim 1,
    wherein the fluororesin (A) is a melt-moldable fluororesin.

3.  The foam molding resin composition according to claim 1 or 2,
    wherein the fluororesin (A) includes at least one selected from the group consisting of a tetrafluoroethylene/hexafluoropropylene copolymer and a tetrafluoroethylene/perfluoro(alkyl vinyl ether) copolymer.

4.  The foam molding resin composition according to any one of claims 1 to 3,
    wherein the fluororesin (A) is a tetrafluoroethylene/hexafluoropropylene copolymer.

5.  The foam molding resin composition according to any one of claims 1 to 4,
    wherein the fluororesin (A) is fluorinated.

6.  The foam molding resin composition according to any one of claims 1 to 5,
    wherein the foam molding resin composition contains 80 to 99.99% by mass of the fluororesin (A).

7.  The foam molding resin composition according to any one of claims 1 to 6,
    wherein the foam molding resin composition contains 97% by mass or more and less than 99.85% by mass of the fluororesin (A).

8.  The foam molding resin composition according to any one of claims 1 to 7,
    wherein the foam molding resin composition contains substantially no low molecular weight fluorocompound.

9.  The foam molding resin composition according to any one of claims 1 to 8,
    wherein the compound (B) has a crystallite size of 200 to 1,000 Å determined by X-ray diffractometry and a volatilization amount at 330°C of 1.0% by mass or lower.

10. The foam molding resin composition according to any one of claims 1 to 9,
    wherein the compound (B) is dispersed in the fluororesin (A) with a distance between centroids of 0.5 to 2.0 μm.

11. The foam molding resin composition according to any one of claims 1 to 10,
    wherein the compound (B) is dispersed in the fluororesin (A) at a density of 15,000 particles/mm$^2$ or more.

12. The foam molding resin composition according to any one of claims 1 to 11,
    wherein the compound (B) is dispersed in the fluororesin (A) with a particle size of 4.0 μm or less.

13. The foam molding resin composition according to any one of claims 1 to 12,
    wherein the compound (B) has a thermal decomposition temperature of 270°C or higher.

14. The foam molding resin composition according to any one of claims 1 to 13,
    wherein the compound (B) includes at least one selected from the group consisting of a cyclic tetrapyrrole compound, barium sulfate, silicon dioxide, and aluminum oxide.

15. The foam molding resin composition according to any one of claims 1 to 14,
    wherein the compound (B) includes copper phthalocyanine.

16. The foam molding resin composition according to any one of claims 1 to 15,
    wherein the foam molding resin composition contains 0.1 to 20 parts by mass of the compound (B) relative to 100 parts by mass of the fluororesin (A).

17. The foam molding resin composition according to any one of claims 1 to 16,
    wherein the foam molding resin composition contains 0.5 to 2.0 parts by mass of the compound (B) relative to 100 parts by mass of the fluororesin (A).

18. A foam-molded article formed using the foam molding resin composition according to any one of claims 1 to 17.

19. A method for producing a foam-molded article, the method comprising:
    foam molding the foam molding resin composition according to any one of claims 1 to 17.

20. The method for producing a foam-molded article according to claim 19,
    wherein the foam molding includes batch foam molding.

## INTERNATIONAL SEARCH REPORT

| International application No. |
| --- |
| **PCT/JP2025/007779** |

### A. CLASSIFICATION OF SUBJECT MATTER

***C08J 9/04***(2006.01)i

FI: C08J9/04 101; C08J9/04 CEW

According to International Patent Classification (IPC) or to both national classification and IPC

### B. FIELDS SEARCHED

Minimum documentation searched (classification system followed by classification symbols)

C08J9/00-9/42; C08L27/12-27/20; H01B7/02; H01B13/14

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 03/000792 A1 (DAIKIN INDUSTRIES, LTD.) 03 January 2003 (2003-01-03) entire text | 1-20 |
| A | JP 2011-9206 A (HITACHI CABLE, LTD.) 13 January 2011 (2011-01-13) entire text, all drawings | 1-20 |
| A | JP 1-149840 A (HITACHI CABLE, LTD.) 12 June 1989 (1989-06-12) entire text | 1-20 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 May 2025** | **27 May 2025** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

### INTERNATIONAL SEARCH REPORT
#### Information on patent family members

International application No.

**PCT/JP2025/007779**

| Patent document cited in search report | | | Publication date (day/month/year) | Patent family member(s) | | | Publication date (day/month/year) |
|---|---|---|---|---|---|---|---|
| WO | 03/000792 | A1 | 03 January 2003 | US entire text CN | 2004/0198886 1639254 | A1 A | |
| JP | 2011-9206 | A | 13 January 2011 | US entire text, all drawings CN | 2010/0300725 101944405 | A1 A | |
| JP | 1-149840 | A | 12 June 1989 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015004057 A
- US 4764538 A

- JP 2011514407 T